# EUROPEAN PATENT APPLICATION

(11) **EP 3 438 591 A1**
(43) Date of publication of application: **06.02.2019**
(21) Application number: 17774632.8
(22) Date of filing: 23.03.2017
(51) Int. Cl.: F28D 9/02, F28F 3/08

(54) **DIFFUSION BONDING-TYPE HEAT EXCHANGER**

(30) Priority: 31.03.2016 JP 2016070834
(71) Applicant: Sumitomo Precision Products Co., Ltd., Hyogo 660-0891 (JP)
(72) Inventor: FUJITA, Yasuhiro, Amagasaki-shi Hyogo 660-0891 (JP); MORIKAWA, Tatsuya, Amagasaki-shi Hyogo 660-0891 (JP); TAKAHASHI, Suguru, Amagasaki-shi Hyogo 660-0891 (JP)
(74) Representative: Viering, Jentschura & Partner mbB Patent- und Rechtsanwälte
(86) International application number: PCT/JP2017/011612
(87) International publication number: WO 2017/170091

(57) **Abstract**

A diffusion-bonded heat exchanger (100) includes a core (1) in which a first heat transfer plate (10) and a second heat transfer plate (20) are stacked and diffusion-bonded to each other, a plurality of pairs of first ports (2), and second ports (3). The first heat transfer plate (10) includes a plurality of first fluid passages (11).

## Description

### Technical Field

The present invention relates to a diffusion-bonded heat exchanger, and more particularly, it relates to a diffusion-bonded heat exchanger in which a plurality of heat transfer plates including groove-like fluid passages are stacked and diffusion-bonded to each other.

### Background Art

Conventionally, a diffusion-bonded heat exchanger in which a plurality of heat transfer plates including groove-like fluid passages are stacked and diffusion-bonded to each other is known. Such a diffusion-bonded heat exchanger is disclosed in Japanese Patent Laid-Open No. 2013-155971, for example.

Japanese Patent Laid-Open No. 2013-155971 discloses a heat exchanger including a core in which first heat transfer plates and second heat transfer plates are alternately stacked and are diffusion-bonded to each other. There are four types of first heat transfer plates A, B, C, and D, and each type includes a plurality of first heat transfer plates. There is one type of second heat transfer plates E, and this type includes a plurality of second heat transfer plates. In the core, the respective heat transfer plates are stacked in the order of EAE..., EBE..., ECE..., and EDE.... The outer shapes of the four types of first heat transfer plates and one type of second heat transfer plates are common. The heat exchanger disclosed in Japanese Patent Laid-Open No. 2013-155971 is configured as an intercooler of a multistage compression system using four compressors. A fluid (hydrogen) that has passed through the first to fourth stage compressors flows through each of the four types of first heat transfer plates A, B, C, and D, and a refrigerant (cooling water) flows through the second heat transfer plate E. The core is provided with a plurality of ports connected to connection passages that pass through the heat transfer plates in a thickness direction and corresponding to the heat transfer plates A to E, respectively. Fluid distribution to each of the heat transfer plates A to E is performed through the corresponding port.

### Prior Art

### Patent Document

Patent Document 1: Japanese Patent Laid-Open No. 2013-155971

### Summary of the Invention

Problems to be Solved by the Invention

However, in Japanese Patent Laid-Open No. 2013-155971, each of the four types of first heat transfer plates A to D and one type of second heat transfer plates E that sandwich each first heat transfer plate therebetween in an upward-downward direction need to include a plurality of heat transfer plates. Therefore, in Japanese Patent Laid-Open No. 2013-155971, when a common diffusion-bonded heat exchanger handles a plurality of types of fluids, the number of types of components (the number of types of heat transfer plates) and the number of components (the total number of heat transfer plates) disadvantageously increase.

Furthermore, in Japanese Patent Laid-Open No. 2013-155971, in order to stack and diffusion-bond the four types of first heat transfer plates and one type of second heat transfer plates, it is necessary to commonize the outer shapes of the respective heat transfer plates, and when loads on the first heat transfer plates are greatly different from each other, the degree of freedom disadvantageously decreases, and the optimization disadvantageously becomes difficult.

The present invention has been proposed in order to solve the aforementioned problems, and one object of the present invention is to provide a diffusion-bonded heat exchanger capable of reducing the number of types of components and the number of components even when a plurality of types of fluids are handled by a common diffusion-bonded heat exchanger, and capable of sufficiently ensuring the degree of freedom of the configuration of fluid passages.

### Means for Solving the Problems

In order to attain the aforementioned object, a diffusion-bonded heat exchanger according to the present invention includes a core in which a first heat transfer plate and a second heat transfer plate each including a groove-like fluid passage are stacked and diffusion-bonded to each other, a plurality of pairs of first ports through which fluids are introduced into and discharged from the first heat transfer plate, and at least a pair of second ports through which a fluid is introduced into and discharged from the second heat transfer plate, and the first heat transfer plate includes a plurality of first fluid passages connected to different pairs of the first ports and isolated from each other.

As described above, the diffusion-bonded heat exchanger according to the present invention includes the first heat transfer plate including the plurality of first fluid passages connected to the different pairs of first ports and isolated from each other. Thus, instead of providing a plurality of types of first heat transfer plates, the first heat transfer plate including a plurality of types of first fluid passages can be provided. That is, instead of providing a heat transfer plate for each type of fluid, the first heat transfer plate common to a plurality of types of fluids can be provided. Consequently, even when the plurality of types of fluids are handled by the common diffusion-bonded heat exchanger, the number of types of components and the number of components can be reduced. Furthermore, the plurality of types of first fluid passages can be formed in the same first heat transfer plate, and thus for example, one first fluid passage is reduced in size according to a load (the amount of heat exchange) on each fluid etc. such that another first fluid passage can be formed in an empty space, or the planar size of a product can be reduced. That is, the degree of freedom in the configuration of the fluid passages can be sufficiently ensured.

In the aforementioned diffusion-bonded heat exchanger according to the present invention, the second ports preferably include a plurality of pairs of second ports, the second heat transfer plate preferably includes a plurality of second fluid passages formed so as to correspond to the first fluid passages of the first heat transfer plate and isolated from each other, and the plurality of second fluid passages are preferably respectively connected to different pairs of the second ports. Here, the term "corresponding" indicates the relationship in which heat exchange is mostly performed between the fluid that flows through one first fluid passage and the fluid that flows through the second fluid passage(s). One first fluid passage may correspond to one second fluid passage, or one second fluid passage may correspond to a plurality of first fluid passages. According to this configuration, the plurality of second fluid passages are formed so as to correspond to the plurality of first fluid passages such that heat exchange between the fluids can be efficiently performed. Furthermore, the plurality of second fluid passages are connected to the different pairs of second ports such that the type, the flow rate, etc. of the fluid that flows through each of the second fluid passages can be individually set for each of the second fluid passages according to the amount of heat exchange between the fluids that flow through the first fluid passages and the second fluid passages corresponding to each other.

In this case, the second fluid passages are preferably equal in number to the first fluid passages, and the second fluid passages are preferably respectively disposed at locations that overlap the plurality of first fluid passages of the first heat transfer plate in a planar view. According to this configuration, the plurality of second fluid passages can be provided in a one-to-one correspondence with the plurality of first fluid passages. Here, when one wide second fluid passage (one second fluid passage corresponding to the plurality of first fluid passages) is provided at a location that overlaps the plurality of first fluid passages, for example, it becomes difficult to independently adjust the amount of heat exchange between one first fluid passage and the second fluid passage and the amount of heat exchange between another first fluid passage and the second fluid passage. On the other hand, the first fluid passages are provided in a one-to-one correspondence with the second fluid passages such that heat exchange can be efficiently performed between the fluids that flow through pairs of the first fluid passages 11a, 11b, and 11c and the second fluid passages 21a, 21b, and 21c corresponding to each other. Furthermore, the flow rate of the fluid that flows through the second fluid passages, for example, can be easily optimized.

In the aforementioned diffusion-bonded heat exchanger according to the present invention, the plurality of first fluid passages are each preferably formed into an elongated shape that extends in a first direction from one end connected to the first port on an entrance side toward another end connected to the first port on an exit side corresponding thereto in a plane of the first heat transfer plate, and are preferably disposed side by side along a second direction orthogonal to the first direction. Here, the term "elongated shape" indicates a shape in which in the plane of the first heat transfer plate, one (first direction) of two directions orthogonal to each other is a longitudinal direction, and the other one (second direction) is a short-side direction. According to this configuration, the plurality of first fluid passages are each formed into an elongated shape from one end toward another end such that the flow rate can be easily increased to improve the heat transfer coefficient even with a simple flow passage shape as compared with the case where the plurality of first fluid passages are each formed into a wide shape. On the other hand, as the outer shape of the entire first heat transfer plate is more elongated, a load applied to a stacked body of the first heat transfer plate and the second heat transfer plate when diffusion bonding is performed is more likely to vary, and the ease of manufacturing the core is reduced. Therefore, the first fluid passages each having an elongated shape that extends in the first direction are disposed side by side along the second direction such that the vertical and horizontal dimensions of the outer shape of the entire first heat transfer plate can be brought closer to each other (the aspect ratio can be brought closer to 1). Consequently, variations in the load at the time of performing diffusion bonding can be suppressed, and the ease of manufacturing the core can be improved.

In this case, the plurality of first fluid passages are preferably spaced apart from each other in the second direction on a same surface of the first heat transfer plate, and the first heat transfer plate preferably includes a diffusion bonding surface with the second heat transfer plate between the first fluid passages adjacent to each other in the second direction. According to this configuration, each of the plurality of first fluid passages disposed on the same surface of the first heat transfer plate can be easily isolated as an independent fluid passage. Furthermore, on the surface of the first heat transfer plate, the diffusion bonding surface that extends in the first direction can be formed between the plurality of first fluid passages aligned in the second direction, and thus the diffusion bonding strength between the first heat transfer plate and the second heat transfer plate can be easily ensured as compared with the case where the first heat transfer plate and the second heat transfer plate are bonded to each other only with the outer peripheral portion of the heat transfer plate surface or a gap (partition wall) between the flow passages constituting the first fluid passages, for example.

In the aforementioned diffusion-bonded heat exchanger according to the present invention, each of the plurality of first fluid passages preferably includes a flow passage that connects one end connected to the first port on an entrance side to another end connected to the first port on an exit side corresponding thereto, and at least one of the plurality of first fluid passages is preferably different from another one of the plurality of first fluid passages in at least one of a flow passage width of the flow passage, a flow passage length of the flow passage, a flow passage depth of the flow passage, and a number of the flow passages. Here, when a plurality of types of fluid passages are individually provided on separate heat transfer plates (a plurality of types of heat transfer plates are provided), there is almost no degree of freedom in the configuration of the fluid passages in each of the heat transfer plates, and thus it is necessary to adjust the load using the number of stacked heat transfer plates as a unit. Therefore, even when a change in the number of stacked heat transfer plates, i.e. any number of stacked heat transfer plates such as two or three stacked heat transfer plates, does not result in a balance of the amount of heat exchange, according to the present invention, the plurality of types of first fluid passages are different in configuration (the flow passage width of the flow passage, the flow passage length of the flow passage, the flow passage depth of the flow passage, or the number of flow passages) such that a surplus amount of heat exchange that cannot be adjusted by the number of heat transfer plates can be easily and finely adjusted for each of the first fluid passages. Consequently, the amount of heat exchange can be easily and accurately optimized according to the load (the amount of heat exchange) on each type of first fluid passage.

### Effect of the Invention

According to the present invention, as described above, the diffusion-bonded heat exchanger capable of reducing the number of types of components and the number of components even when the plurality of types of fluids are handled by the common diffusion-bonded heat exchanger, and capable of sufficiently ensuring the degree of freedom of the configuration of the fluid passages can be provided.

### Brief Description of the Drawings

[Fig. 1] A schematic view of a heat exchanger according to a first embodiment of the present invention as viewed from the upper surface side thereof.
[Fig. 2] A schematic view of the heat exchanger according to the first embodiment of the present invention as viewed from the side surface side thereof.
[Fig. 3] A schematic perspective view showing a first heat transfer plate and a second heat transfer plate.
[Fig. 4] A schematic view illustrating a stacked structure of first heat transfer plates and second heat transfer plates.
[Fig. 5] A plan view showing a configuration example of first fluid passages of the first heat transfer plate.
[Fig. 6] A plan view showing a configuration example of second fluid passages of the second heat transfer plate.
[Fig. 7] A sectional view of a core showing a cross section orthogonal to the first fluid passages and the second fluid passages.
[Fig. 8] A schematic view showing a first heat transfer plate of a heat exchanger according to a second embodiment.
[Fig. 9] A sectional view of the first heat transfer plate showing a cross section orthogonal to first fluid passages in Fig. 8.
[Fig. 10] A schematic view showing a first heat transfer plate (A) and a second heat transfer plate (B) according to a first modified example of the first embodiment.
[Fig. 11] A schematic view showing a first heat transfer plate (A) and a second heat transfer plate (B) according to a second modified example of the first embodiment.

### Modes for Carrying Out the Invention

Embodiments of the present invention are hereinafter described on the basis of the drawings.

### (First Embodiment)

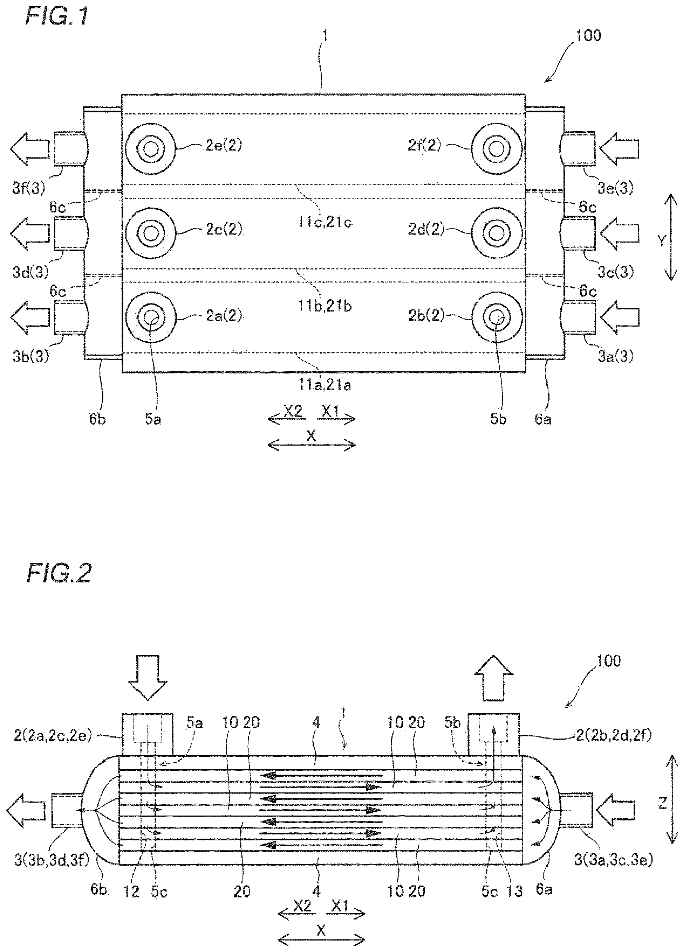

The configuration of a heat exchanger 100 according to a first embodiment is now described with reference to Figs. 1 to 7. The heat exchanger 100 according to the first embodiment is a diffusion-bonded plate heat exchanger in which first heat transfer plates 10 and second heat transfer plates 20, each of which includes groove-like fluid passages, are stacked and diffusion-bonded to each other to be integral and unitary with each other. The heat exchanger 100 is an example of a "diffusion-bonded heat exchanger" in the claims.

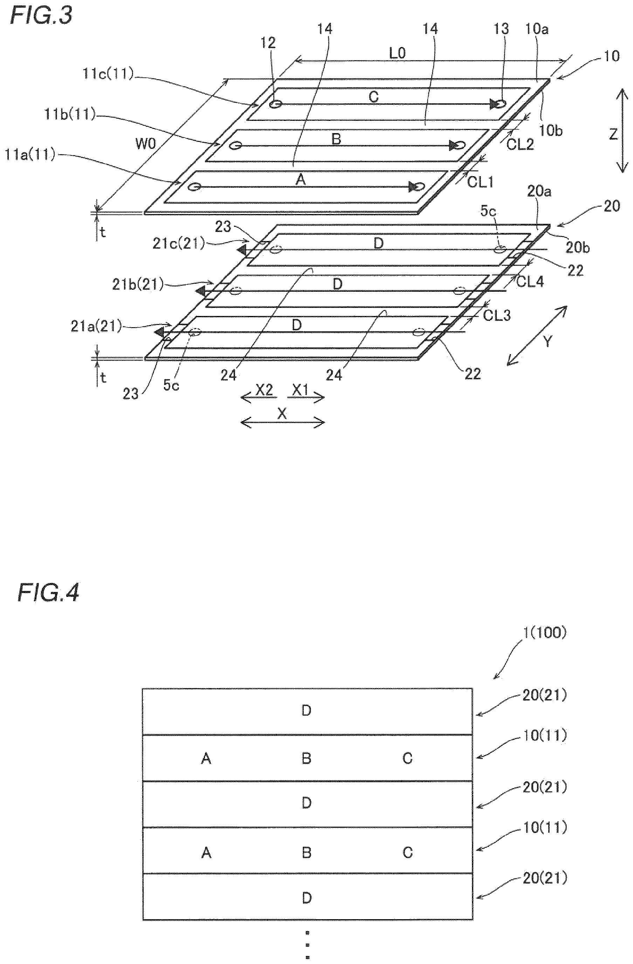

As shown in Figs. 1 and 2, the heat exchanger 100 includes a core 1, a plurality of pairs (three pairs) of first ports 2, and a plurality of pairs (three pairs) of second ports 3. As shown in Fig. 2, the core 1 includes a plurality of first heat transfer plates 10 including groove-like first fluid passages 11 (see Fig. 3) and a plurality of second heat transfer plates 20 including groove-like second fluid passages 21 (see Fig. 3). The core 1 is a heat exchanging portion that performs heat exchange between fluids flowing through the first heat transfer plates 10 and a fluid flowing through the second heat transfer plates 20. The first ports 2 are entrances and exits through which the fluids are introduced into and discharged from the first heat transfer plates 10 (first fluid passages 11), and are provided as pairs of the entrance side and the exit side. The second ports 3 are entrances and exits through which the fluid is introduced into and discharged from the second heat transfer plates 20 (second fluid passages 21), and are provided as pairs of the entrance side and the exit side.

As shown in Fig. 2, side plates 4 are provided at both ends of the core 1 in the stacking direction (direction Z) of the first heat transfer plates 10 and the second heat transfer plates 20, respectively. The core 1 is formed by alternately stacking and diffusion-bonding the first heat transfer plates 10 and the second heat transfer plates 20, each of which includes the groove-like fluid passages. That is, the core 1 is formed into a rectangular box shape (rectangular parallelepiped shape) as a whole by sandwiching a stacked body of the first heat transfer plates 10 and the second heat transfer plates 20 alternately stacked between a pair of side plates 4 and mutually joining the first heat transfer plates 10 and the second heat transfer plates 20 by diffusion bonding. For the sake of simplicity, Fig. 2 shows an example in which three layers of (three) first heat transfer plates 10 and four layers of (four) second heat transfer plates 20 are alternately stacked, but the number of stacked plates is not restricted to this, and any number of plates may be stacked. In the following description, the stacking direction of the first heat transfer plates 10 and the second heat transfer plates 20 shown in Fig. 2 is defined as a direction Z. As shown in Fig. 1, the longitudinal direction of the core 1 as viewed in the direction Z is defined as a direction X, and the short-side direction of the core 1 is defined as a direction Y.

As shown in Fig. 3, the first heat transfer plates 10 and the second heat transfer plates 20 each have a flat plate shape and are formed into a rectangular shape in a planar view. The first heat transfer plates 10 and the second heat transfer plates 20 have substantially the same planar shape, and both of them have a length L0 in the direction X (longitudinal direction) and a width W0 in the direction Y (short-side direction). The first heat transfer plates 10 and the second heat transfer plates 20 each have substantially the same thickness t, but the thicknesses t of the first heat transfer plates 10 and the second heat transfer plates 20 may be different from each other. The first heat transfer plates 10 and the second heat transfer plates 20 are made of a stainless steel material. The first heat transfer plates 10 and the second heat transfer plates 20 may be made of a high thermal conductive metal material other than the stainless steel material. The first fluid passages 11 and the second fluid passages 21 are respectively formed on one surface 10a (the upper surface) of each of the first heat transfer plates 10 and one surface 20a (the upper surface) of each of the second heat transfer plates 20. Another surface 10b (the lower surface) of each of the first heat transfer plates 10 and another surface 20b (the lower surface) of each of the second heat transfer plates 20 are both flat surfaces.

### (First Heat Transfer Plate)

According to the first embodiment, the first heat transfer plates 10 each include a plurality of first fluid passages 11 connected to different pairs of first ports 2 (pairs of first ports 2 on the entrance side and the exit side) and isolated from each other. That is, in each of the first heat transfer plates 10, the plurality of first fluid passages 11 through which fluids can flow independently of each other are disposed side by side.

In an example shown in Fig. 3, each of the first heat transfer plates 10 includes three first fluid passages 11a, 11b, and 11c. As shown in Fig. 1, the first fluid passage 11a is connected to a pair of first ports 2a and 2b. The first fluid passage 11b is connected to a pair of first ports 2c and 2d. The first fluid passage 11c is connected to a pair of first ports 2e and 2f. According to the first embodiment, the first ports 2a, 2c, and 2e on the X2 side are ports on the entrance side, and the first ports 2b, 2d, and 2f on the X1 side are ports on the exit side. Each of the first ports 2 (2a to 2f) is a cylindrical pipe member. Each of the first ports 2 may be a member other than the cylindrical pipe member. For example, the first ports 2a, 2c, and 2e (2b, 2d, and 2f) may be collectively formed by forming as many through-holes as the number of ports in a block member that extends in the direction Y.

As shown in Fig. 3, each of the three first fluid passages 11a, 11b, and 11c includes an inlet port 12 and an outlet port 13. The inlet port 12 and the outlet port 13 are examples of "one end" and "another end" in the claims, respectively. Both the inlet port 12 and the outlet port 13 are circular through-holes that pass through the first heat transfer plate 10 in a thickness direction. As shown in Fig. 2, (six) through-holes 5c similar to the inlet port 12 and the outlet port 13 are formed at the corresponding locations (locations that overlap each other in the direction Z) of each of the second heat transfer plates 20 and the upper side plate 4. Therefore, the inlet ports 12 and the through-holes 5c of the stacked first heat transfer plates 10 and second heat transfer plates 20 (side plate 4) are connected in the thickness direction (direction Z) to form, as a whole, three inlet passages 5a that extend in the direction Z in the core 1. The inlet passages 5a are connected to the first ports 2a, 2c, and 2e on the entrance side, respectively. Similarly, the outlet ports 13 and the through-holes 5c are connected to each other to form, as a whole, three outlet passages 5b that extend in the direction Z in the core 1. The outlet passages 5b are connected to the first ports 2b, 2d, and 2f on the exit side, respectively. As described later, the second fluid passages 21 of the second heat transfer plates 20 do not communicate with the through-holes 5c and are isolated from each other.

Different fluids can be supplied to the first fluid passages 11a, 11b, and 11c via the first ports 2a, 2c, and 2e, respectively. The same fluid may be supplied to the first fluid passages 11a, 11b, and 11c. In the first embodiment, an example in which the heat exchanger 100 is used as an intercooler of a multistage compression system including a plurality of compressors is shown. In this case, as shown in Fig. 3, the fluid (fluid A) that has passed through a first stage compressor is supplied to the first fluid passage 11a, the fluid (fluid B) that has passed through a second stage compressor is supplied to the first fluid passage 11b, and the fluid (fluid C) that has passed through a third stage compressor is supplied to the first fluid passage 11c. In this case, the fluids A, B, and C are common, but the pressures thereof are different. The fluids may be gas or liquid.

According to the first embodiment, each of the plurality of first fluid passages 11 is formed into an elongated shape that extends in a first direction from the inlet port 12 connected to the first port 2 on the entrance side toward the corresponding outlet port 13 connected to the first port 2 on the exit side in the plane (in one surface 10a) of the first heat transfer plate 10. The plurality of first fluid passages 11 are disposed side by side along a second direction orthogonal to the first direction.

According to the first embodiment, the first direction coincides with the direction X, and the second direction coincides with the direction Y. That is, each of the three first fluid passages 11 extends along the longitudinal direction (the long side of the first heat transfer plate 10) of the core 1. The three first fluid passages 11 are disposed side by side along the short-side direction (the short side of the first heat transfer plate 10) of the core 1.

According to the first embodiment, the plurality of first fluid passages 11 are spaced apart from each other in the second direction on the same surface (one surface 10a) of the first heat transfer plate 10. The first heat transfer plate 10 includes a diffusion bonding surface 14 with the second heat transfer plate 20 between the first fluid passages 11 adjacent to each other in the second direction. In the example shown in Fig. 3, the first fluid passage 11a and the first fluid passage 11b are disposed at an interval CL1 in the direction Y. The first fluid passage 11b and the first fluid passage 11c are disposed at an interval CL2 in the direction Y. The intervals CL1 and CL2 may be equal to or different from each other. The diffusion bonding surface 14 is a region of the interval CL1 and a region of the interval CL2 between the first fluid passages 11. The diffusion bonding surface 14 extends in the direction X so as to partition the three first fluid passages 11. An outer peripheral portion of one surface 10a of the first heat transfer plate 10 that surrounds the three first fluid passages 11 is also a bonding surface. The diffusion bonding surface 14 extends from the outer peripheral portion on one end side to the outer peripheral portion on the other end side in the direction X.

### (Second Heat Transfer Plate)

According to the first embodiment, the second heat transfer plates 20 each include a plurality of second fluid passages 21 formed so as to correspond to the first fluid passages 11 of the first heat transfer plate 10 and isolated from each other. That is, in each of the second heat transfer plates 20, the plurality of second fluid passages 21 through which fluids can flow independently of each other are disposed side by side. The plurality of second fluid passages 21 are respectively connected to different pairs of second ports 3 (pairs of second ports 3 on the entrance side and the exit side) (see Fig. 1).

According to the first embodiment, the second fluid passages 21 are equal in number to the first fluid passages 11. Therefore, in the example shown in Fig. 3, each of the second heat transfer plates 20 includes three second fluid passages 21a, 21b, and 21c corresponding to the three first fluid passages 11a, 11b, and 11c. That is, a pair of first and second fluid passages 11a and 21a, a pair of first and second fluid passages 11b and 21b, and a pair of first and second fluid passages 11c and 21c are formed, and heat exchange is mostly performed between each pair of fluid passages. In addition, the second fluid passages 21 are respectively disposed at locations that overlap the plurality of first fluid passages 11 of the first heat transfer plate 10 in a planar view. That is, each pair of first and second fluid passages 11 and 21 overlap in the stacking direction (direction Z). Therefore, heat exchange can be efficiently performed as compared with the case where each pair are disposed at locations shifted in the direction Y in a planar view and do not overlap in the direction Z, for example.

Fluids are supplied to the second fluid passages 21a to 21c via headers 6a and 6b (see Fig. 2) that cover both side end faces of the core 1 in the direction X. Therefore, each of the second fluid passages 21a, 21b, and 21c shown in Fig. 3 is continuous from one end to another end of the second heat transfer plate 20. Specifically, the second fluid passages 21a, 21b, and 21c each include an inlet opening 22 that opens into the interior of the header 6a (see Fig. 2) from the side end face of the second heat transfer plate 20 on the X1 side, and respectively communicate with second ports 3a, 3c, and 3e (see Fig. 1). Furthermore, the second fluid passages 21a, 21b, and 21c each include an outlet opening 23 that opens into the interior of the header 6b (see Fig. 2) from the side end face of the second heat transfer plate 20 on the X2 side, and respectively communicate with second ports 3b, 3d, and 3f (see Fig. 1). According to the first embodiment, the second ports 3a, 3c, and 3e are ports on the entrance side, and the second ports 3b, 3d, and 3f are ports on the exit side.

As shown in Fig. 1, each of the headers 6a and 6b has a semicylindrical shape (see Fig. 2) that extends in the direction Y, and both ends thereof in the direction Y are closed. The header 6a covers the side end face of the core 1 on the X1 side, and is provided to internally store fluids. The header 6b covers the side end face of the core 1 on the X2 side, and is provided to internally store fluids. Partition plates 6c are provided inside each of the headers 6a and 6b. The interior of the header 6a is partitioned by the partition plates 6c into a space that connects the second fluid passage 21a and the second port 3a, a space that connects the second fluid passage 21b and the second port 3c, and a space that connects the second fluid passage 21c and the second port 3e. Similarly, the interior of the header 6b is partitioned by the partition plates 6c into a space that connects the second fluid passage 21a and the second port 3b, a space that connects the second fluid passage 21b and the second port 3d, and a space that connects the second fluid passage 21c and the second port 3f. Consequently, the second fluid passages 21a, 21b, and 21c are respectively connected to the different pairs of second ports 3 (a pair of second ports 3a and 3b, a pair of second ports 3c and 3d, and a pair of second ports 3e and 3f).

Different fluids can be supplied to the second fluid passages 21a, 21b, and 21c via the second ports 3a, 3c, and 3e, respectively. The fluids to be supplied to the second fluid passages 21 may be gas or liquid. The same fluid may be supplied to the second fluid passages 21a, 21b, and 21c. According to the first embodiment, a fluid (fluid D), which serves as a refrigerant for cooling the compressed fluids (fluid A, fluid B, and fluid C) on the first fluid passage 11 side, is supplied to each of the second fluid passages 21a, 21b, and 21c. The fluid D is a coolant, for example.

The second fluid passages 21a, 21b, and 21c are independent fluid passages individually connected to the second ports 3a, 3c, and 3e, respectively. Therefore, even when the common fluid D is allowed to flow through each of the second fluid passages 21a, 21b, and 21c, fluid characteristics such as a supply pressure and a flow rate from each port can be made different.

As shown in Fig. 3, according to the first embodiment, each of the plurality of second fluid passages 21 is formed into an elongated shape that extends in the first direction (direction X) from the inlet opening 22 connected to the second port 3 on the entrance side toward the corresponding outlet opening 23 connected to the second port 3 on the exit side in the plane of the second heat transfer plate 20. The plurality of second fluid passages 21 are disposed side by side along the second direction (direction Y) orthogonal to the first direction. That is, each of the three second fluid passages 21 extends along the longitudinal direction (the long side of the second heat transfer plate 20) of the core 1. Furthermore, the three second fluid passages 21 are disposed side by side along the short-side direction (the short side of the second heat transfer plate 20) of the core 1. Therefore, the plurality of first fluid passages 11 and the plurality of second fluid passages 21 overlap each other in an upward-downward direction (direction Z), and extend substantially in parallel to each other.

According to the first embodiment, the plurality of second fluid passages 21 are spaced apart from each other in the direction Y on the same surface (one surface 20a) of the second heat transfer plate 20. In the example shown in Fig. 3, the second fluid passage 21a and the second fluid passage 21b are disposed at an interval CL3 in the direction Y. The second fluid passage 21b and the second fluid passage 21c are disposed at an interval CL4 in the direction Y. The intervals CL3 and CL4 may be equal to or different from each other. The second heat transfer plate 20 includes a diffusion bonding surface 24 with the first heat transfer plate 10 between the second fluid passages 21 adjacent to each other in the direction Y. The diffusion bonding surface 24 is a region of the interval CL3 and a region of the interval CL4. According to the first embodiment, the arrangement and shape of the first fluid passages 11 of the first heat transfer plate 10 and the arrangement and shape of the second fluid passages 21 of the second heat transfer plate 20 may be substantially common. For example, the intervals CL1, CL2, CL3, and CL4 may be equal to each other.

With the above configuration, the fluids (fluid A, fluid B, and fluid C) respectively flow through the first fluid passages 11 from the X2 side to the X1 side in the first heat transfer plate 10, as shown in Fig. 2. In the second heat transfer plate 20, the fluid (fluid D) flows through the second fluid passages 21 from the X1 side to the X2 side. That is, the heat exchanger 100 is a counter-flow heat exchanger in which the fluids that pass through the first heat transfer plate 10 and the fluid that passes through the second heat transfer plate 20 flow in opposite directions.

The layer structure of the core 1 is schematically shown in Fig. 4. In the core 1, the first heat transfer plates 10 through which the fluid A, the fluid B, and the fluid C to be cooled flow are stacked so as to be sandwiched by the second heat transfer plates 20 through which the fluid D serving as a refrigerant flows.

### (First Fluid Passage)

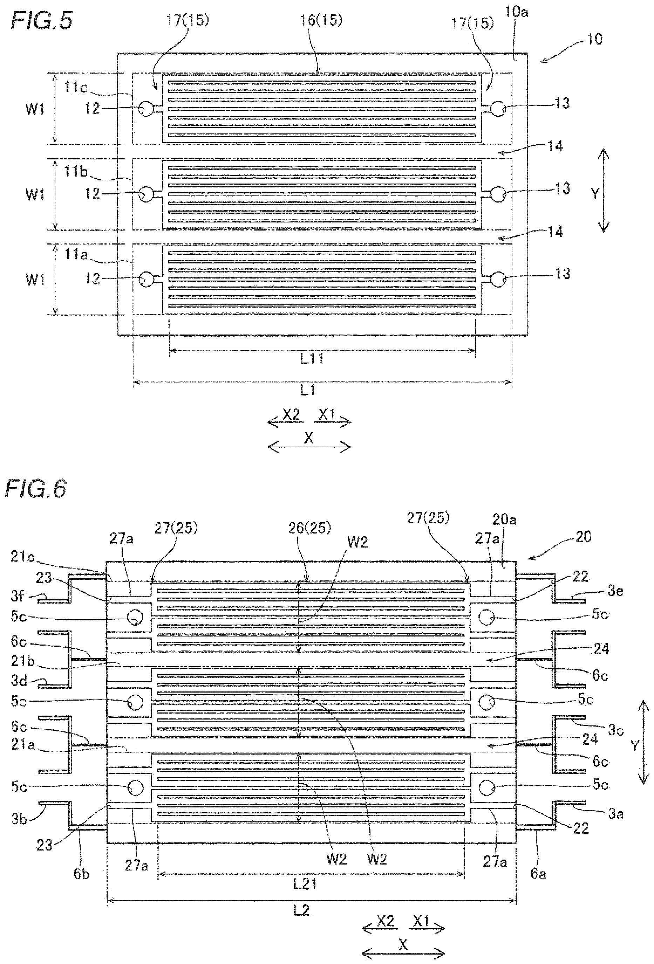

As an example, the first fluid passages 11 each have a flow passage shape, as shown in Fig. 5. In the first embodiment, an example in which the three first fluid passages 11 (11a, 11b, and 11c) have a common configuration is shown. That is, in the example shown in Fig. 5, the three first fluid passages 11 (11a to 11c) are formed into substantially the same shape. The three first fluid passages 11 (11a to 11c) each have an outer shape having a length L1 in the direction X (longitudinal direction) and a width W1 in the direction Y (short-side direction).

Each of the plurality of first fluid passages 11 includes a flow passage 15 that connects the inlet port 12 connected to the first port 2 on the entrance side to the outlet port 13 connected to the corresponding first port 2 on the exit side. In the configuration example of Fig. 5, the first fluid passages 11 each include the inlet port 12, the outlet port 13, a plurality of heat exchange passages 16, and connection passages 17. The flow passage 15 includes the heat exchange passages 16 and the connection passages 17.

The heat exchange passages 16 are linear flow passages provided to perform heat exchange between the fluids, extend in the direction X, and are aligned in parallel to each other in the direction Y. In the configuration example of Fig. 5, the first fluid passages 11 each include eight heat exchange passages 16. The number of heat exchange passages 16 may be other than eight.

The connection passages 17 are provided between the inlet port 12 and the plurality of heat exchange passages 16 and between the outlet port 13 and the plurality of heat exchange passages 16, respectively. The structures of the connection passages 17 are common on the inlet port 12 side and the outlet port 13 side, and thus only the connection passage 17 of the inlet port 12 is described.

One end side of the connection passage 17 is connected to the inlet port 12, and another end side of the connection passage 17 is connected to each of the plurality of (eight) heat exchange passages 16. Accordingly, the connection passage 17 has a function of distributing the fluid from the inlet port 12 to each of the heat exchange passages 16. The connection passage 17 is divided from one inlet port 12 into eight branches, and is connected to each of the eight heat exchange passages 16.

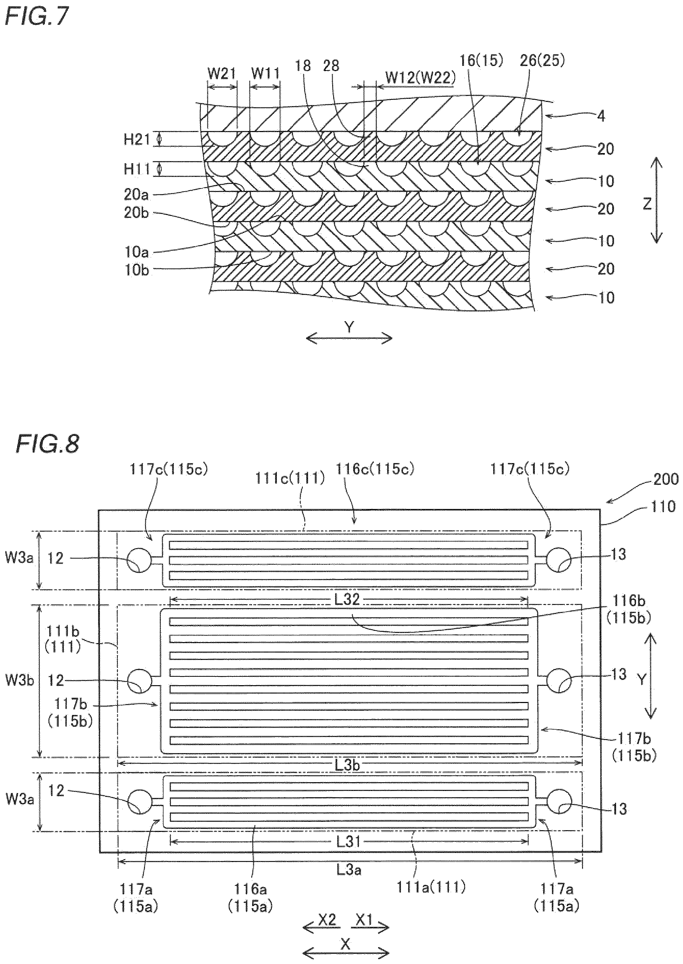

As shown in Fig. 7, the flow passage 15 (the heat exchange passages 16 and the connection passages 17) is formed as a concave groove on one surface 10a of the first heat transfer plate 10. In an example of Fig. 7, the cross-sectional shape orthogonal to a direction in which the flow passage 15 extends is substantially semicircularly recessed. The flow passage 15 is formed by etching or machining, for example. The flow passage 15 has a flow passage width W11 and a flow passage depth H11. The flow passage width and the flow passage depth are common in the heat exchange passages 16 and the connection passages 17. The heat exchange passages 16 each have a flow passage length L11 (see Fig. 5), and a partition wall 18 between the heat exchange passages 16 has a width W12. The flow passage width W11 of the flow passage 15 is larger than the width W12 of the partition wall 18. The width (interval CL1 or CL2) of the diffusion bonding surface 14 is larger than the width W12 of the partition wall 18 between the heat exchange passages 16.

### (Second Fluid Passage)

As an example, the second fluid passages 21 each have a flow passage shape, as shown in Fig. 6. In the first embodiment, an example in which the three second fluid passages 21 (21a, 21b, and 21c) have a common configuration is shown.

In the example of Fig. 6, the three second fluid passages 21 (21a to 21c) are formed into substantially the same shape. The three second fluid passages 21 (21a to 21c) each have an outer shape having a length L2 in the direction X (longitudinal direction) and a width W2 in the direction Y (short-side direction). The width W2 is substantially equal to the width W1 of each of the first fluid passages 11. The second fluid passages 21 open to the end face of the second heat transfer plate 20 (core 1) in the X direction, and thus the length L2 is larger than the length L1 of each of the first fluid passages 11.

Each of the plurality of second fluid passages 21 includes a flow passage 25 that connects the inlet opening 22 connected to the second port 3 on the entrance side to the outlet opening 23 connected to the corresponding second port 3 on the exit side. In the configuration example of Fig. 6, the second fluid passages 21 each include the inlet opening 22, the outlet opening 23, a plurality of heat exchange passages 26, and connection passages 27. The flow passage 25 includes the heat exchange passages 26 and the connection passages 27.

The configurations of the heat exchange passages 26 are the same as those of the heat exchange passages 16 of the first fluid passages 11 in Fig. 5, and the same number of (eight) heat exchange passages 26 with the same shape are provided. The connection passage 27 on the inlet opening 22 side includes a flow passage portion 27a connected to the inlet opening 22 formed in the end face of the second heat transfer plate 20. The flow passage portion 27a is linearly formed, and a pair of flow passage portions 27a are provided on both outer sides of the through-hole 5c in the direction Y. The connection passage 27 is divided from each of the pair of flow passage portions 27a into four branches so as to be divided into eight flow passages in total. Ends (other ends) of the eight branches of the divided connection passage 27 are connected to the corresponding eight heat exchange passages 26, respectively. In this manner, the connection passage 27 of each of the second fluid passages 21 is divided into one side and the other side in the direction Y across the through-hole 5c, and is divided into four branch passages on each side. Similarly, a flow passage portion 27a is also provided in the connection passage 27 on the outlet opening 23 side, and has the same configuration.

As shown in Fig. 7, the flow passage 25 (the heat exchange passages 26 and the connection passages 27) is formed as a concave groove on one surface 20a of the second heat transfer plate 20. In the example of Fig. 7, the cross-sectional shape orthogonal to a direction in which the flow passage 25 extends is a substantially semicircularly recessed. The flow passage 25 has a flow passage width W21 and a flow passage depth H21. The flow passage width W21 and the flow passage depth H21 are substantially equal to the flow passage width W11 and the flow passage depth H11 of the flow passage 15. The flow passage width W21 of the flow passage 25 and the flow passage width W11 of the flow passage 15 may be different from each other. Similarly, the flow passage depth H21 of the flow passage 25 and the flow passage depth H11 of the flow passage 15 may be different from each other. The heat exchange passages 26 each have a flow passage length L21 (see Fig. 6). The flow passage length L21 is substantially equal to the flow passage length L11 of each of the heat exchange passages 16. The width (interval CL3 or CL4) of the diffusion bonding surface 24 between the adjacent second fluid passages 21 is larger than the width W22 of a partition wall 28 between the heat exchange passages 26. Fig. 7 shows an example in which the position of the flow passage 15 and the position of the flow passage 25 in the direction Y (the center positions of the flow passages) coincide with each other, but the position of the flow passage 15 in the direction Y and the position of the flow passage 25 in the direction Y may be shifted from each other.

### (Operation of Heat Exchanger)

With the above configuration, according to the first embodiment, the high-temperature and high-pressure fluid A, fluid B, and fluid C that have passed through different compressors are supplied to the first fluid passages 11a, 11b, and 11c of the first heat transfer plate 10, respectively. The fluid A, the fluid B, and the fluid C flow in through the first ports 2a, 2c, and 2e (see Fig. 1) on the entrance side connected to the respective exit sides of the compressors, and are distributed to the respective inlet ports 12 of the first fluid passages 11a, 11b, and 11c. The respective fluids are cooled while passing through the respective flow passages 15 (the heat exchange passages 16 and the connection passages 17) of the first fluid passages 11a, 11b, and 11c, and flow out through the corresponding first ports 2b, 2d, and 2f (see Fig. 1) on the exit side, respectively.

The fluid (fluid D) serving as a refrigerant is supplied to each of the second fluid passages 21a, 21b, and 21c of the second heat transfer plate 20. The fluid D flows in through each of the second ports 3a, 3c, and 3e (see Fig. 1) on the entrance side, passes through an internal space of the header 6a partitioned by the partition plates 6c, and flows into each of the second fluid passages 21a, 21b, and 21c. The supply pressures to the second ports 3a, 3c, and 3e are individually adjusted according to variations in the amount of heat exchange with the first fluid passages 11a, 11b, and 11c. The fluid D is heated (draws heat) while passing through the respective flow passages 25 (the heat exchange passages 26 and the connection passages 27) of the second fluid passages 21a, 21b, and 21c, and flows out through each of the second ports 3b, 3d, and 3f (see Fig. 1) on the exit side.

According to the first embodiment, the following effects can be obtained.

According to the first embodiment, as described above, the first heat transfer plate 10 including the plurality of first fluid passages 11 connected to the different pairs of first ports 2 (the pair of 2a and 2b, the pair of 2c and 2d, and the pair of 2e and 2f) and isolated from each other is provided. Thus, instead of providing a plurality of types of first heat transfer plates 10, the first heat transfer plate 10 including a plurality of types of first fluid passages 11 can be provided. That is, instead of providing a heat transfer plate for each type of fluid, the first heat transfer plate 10 common to a plurality of types of fluids can be provided.
Consequently, even when the plurality of types of fluids are handled by the common diffusion-bonded heat exchanger 100, the number of types of components (the number of types of first heat transfer plates 10) and the number of components (the total number of first and second heat transfer plates 10 and 20) can be reduced. When the same configuration as in the first embodiment is realized by individual heat transfer plates, for example, three types of three heat transfer plates corresponding to the first fluid passages 11a, 11b, and 11c (three types and nine plates in total) and ten heat transfer plates corresponding to the second fluid passages 21 (one type and ten plates) are required. That is, four types of nineteen heat transfer plates in total are required. On the other hand, the first embodiment only needs two types of seven first and second heat transfer plates 10 and 20 in total.

With the above configuration, the plurality of types of first fluid passages 11 can be formed in the same first heat transfer plate 10, and thus for example, one first fluid passage 11 is reduced in size according to a load (the amount of heat exchange) on each fluid etc. such that another first fluid passage 11 can be formed in an empty space, or the planar size of a product can be reduced. That is, the degree of freedom in the configuration of the fluid passages can be sufficiently ensured. A specific example in which the configuration of the fluid passages is changed is described later.

According to the first embodiment, as described above, the second heat transfer plate 20 including the plurality of second fluid passages 21 formed so as to correspond to the first fluid passages 11 of the first heat transfer plate 10 and isolated from each other is provided. Thus, the plurality of second fluid passages 21 are formed so as to correspond to the plurality of first fluid passages 11 such that heat exchange between the fluids can be efficiently performed. Furthermore, the plurality of second fluid passages 21 are respectively connected to the different pairs of second ports 3 (the pair of 3a and 3b, the pair of 3c and 3d, and the pair of 3e and 3f). Thus, the type, the flow rate, etc. of the fluid that flows through each of the second fluid passages 21 can be individually set for each of the second fluid passages 21 according to the amount of heat exchange between the fluids that flow through the first fluid passages 11 and the second fluid passages 21 corresponding to each other.

According to the first embodiment, as described above, the second fluid passages 21 are equal in number to the first fluid passages 11. Furthermore, the second fluid passages 21 are respectively disposed at the locations that overlap the plurality of first fluid passages 11 of the first heat transfer plate 10 in the planar view. Thus, the plurality of second fluid passages 21 can be provided in a one-to-one correspondence with the plurality of first fluid passages 11. Here, when one wide second fluid passage (one second fluid passage corresponding to the three first fluid passages 11) is provided at a location that overlaps the first fluid passages 11a to 11c, for example, it becomes difficult to independently adjust the amount of heat exchange between one first fluid passage 11a and the second fluid passage and the amount of heat exchange between another first fluid passage 11b and the second fluid passage. On the other hand, the first fluid passages 11a, 11b, and 11c are provided in a one-to-one correspondence with the second fluid passages 21a, 21b, and 21c such that heat exchange can be efficiently performed between the fluids that flow through pairs of the first fluid passages 11a, 11b, and 11c and the second fluid passages 21a, 21b, and 21c corresponding to each other. Furthermore, the flow rate of the fluid that flows through the second fluid passages 21, for example, can be easily optimized.

According to the first embodiment, as described above, the plurality of first fluid passages 11 are each formed into an elongated shape that extends in the direction X from the inlet port 12 toward the corresponding outlet port 13 in one surface 10a of the first heat transfer plate 10, and are disposed side by side along the direction Y orthogonal to the direction X. Thus, as compared with the case where the plurality of first fluid passages 11 are each formed into a wide shape, the flow rate can be easily increased to improve the heat transfer coefficient even with a simple flow passage shape. Furthermore, the first fluid passages 11 each having an elongated shape that extends in the direction X are disposed side by side along the direction Y such that the vertical and horizontal dimensions of the outer shape of the entire first heat transfer plate 10 can be brought closer to each other (the aspect ratio can be brought closer to 1). Consequently, variations in the load at the time of performing diffusion bonding can be suppressed, and the ease of manufacturing the core 1 can be improved.

According to the first embodiment, as described above, the plurality of first fluid passages 11 are spaced apart from each other in the direction Y on one surface 10a of the first heat transfer plate 10. Furthermore, the diffusion bonding surface 14 with the second heat transfer plate 20 is provided in the first heat transfer plate 10 between the first fluid passages 11 adjacent to each other in the direction Y. Thus, each of the plurality of first fluid passages 11 disposed on one surface 10a of the first heat transfer plate 10 can be easily isolated as an independent fluid passage. Furthermore, the diffusion bonding surface 14 that extends in the direction X can be formed between the plurality of first fluid passages 11 aligned in the direction Y. The width (CL1 or CL2) of the diffusion bonding surface 14 is larger than the width W12 of the partition wall 18 such that the diffusion bonding strength between the first heat transfer plate 10 and the second heat transfer plate 20 can be easily ensured as compared with the case where the first heat transfer plate 10 and the second heat transfer plate 20 are bonded to each other only with the outer peripheral portion of the heat transfer plate surface or a gap (partition wall 18) between the flow passages constituting the first fluid passages 11, for example. Similarly, the plurality of second fluid passages 21 of the second heat transfer plate 20 are spaced apart from each other in the direction Y, and the diffusion bonding surface 24 with the first heat transfer plate 10 is provided between the second fluid passages 21 adjacent to each other in the direction Y such that each of the plurality of second fluid passages 21 can be easily isolated as an independent fluid passage. Furthermore, the width (CL3 or CL4) of the diffusion bonding surface 24 is larger than the width W22 of the partition wall 28 such that the diffusion bonding strength between the first heat transfer plate 10 and the second heat transfer plate 20 can be easily ensured.

### (Second Embodiment)

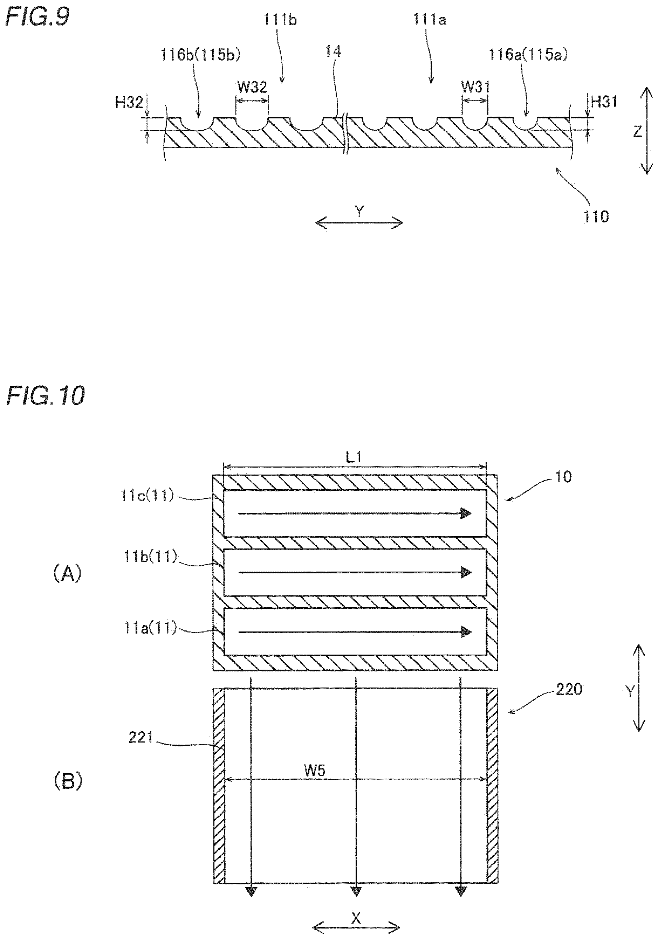

A second embodiment is now described with reference to Figs. 8 and 9. In this second embodiment, an example in which the shapes of three first fluid passages 111a to 111c are different is described unlike the aforementioned first embodiment in which the three first fluid passages 11a to 11c are formed into a common shape.

As shown in Fig. 8, in a heat exchanger 200 according to the second embodiment, a first heat transfer plate 110 includes three first fluid passages 111 (111a, 111b, and 111c) connected to different pairs of first ports 2 (a pair of first ports 2a and 2b, a pair of first ports 2c and 2d, and a pair of first ports 2e and 2f) (see Fig. 1) and isolated from each other. The heat exchanger 200 is an example of a "diffusion-bonded heat exchanger" in the claims.

According to the second embodiment, at least one of a plurality of (three) first fluid passages 111 is different from another one of the plurality of first fluid passages 111 in at least one of the flow passage width of a flow passage 15, the flow passage length of the flow passage 15, the flow passage depth of the flow passage 15, and the number of flow passages 15.

In Fig. 8, the first fluid passage 111b at the center in a direction Y of the three first fluid passages 111a, 111b, and 111c is larger in size than the first fluid passages 111a and 111c on both sides in the direction Y. In an example of Fig. 8, the first fluid passages 111a and 111c have a common configuration. The first fluid passage 111b as a whole has a length L3b in a direction X and a width W3b in the direction Y. The first fluid passages 111a and 111c as a whole each have a length L3a in the direction X and a width W3a in the direction Y. In the example of Fig. 8, the length L3a of each of the first fluid passages 111a and 111c and the length L3b of the first fluid passage 111b are equal to each other. The length L3a and the length L3b may be different from each other. The width W3a of each of the first fluid passages 111a and 111c is smaller than the width W3b of the first fluid passage 111b. The width W3a may be larger than the width W3b. As compared with the configuration according to the first embodiment shown in Fig. 5, the length L3a is equal to the length L1 of the first fluid passage 11 in Fig. 5, but the width W3a is smaller than the width W1 of the first fluid passage 11 in Fig. 5. The length L3b is equal to the length L1 of the first fluid passage 11 in Fig. 5. The width W3b is larger than the width W1 of the first fluid passage 11 in Fig. 5. Therefore, according to the second embodiment, in the first heat transfer plate 110, the first fluid passages 111a and 111c are reduced in size, and thus a larger space is allocated to the first fluid passage 111b.

A flow passage 115a (115c) of the first fluid passage 111a (111c) includes four heat exchange passages 116a (116c). Unlike the aforementioned first embodiment, connection passages 117a (117c) are divided into four branches and are connected in parallel to each of the heat exchange passages 116a (116c). The heat exchange passages 116a (116c) each have a flow passage length L31. As shown in Fig. 9, the flow passage 115a (115c) of the first fluid passage 111a (111c) has a flow passage width W31 and a flow passage depth H31.

A flow passage 115b of the first fluid passage 111b includes nine heat exchange passages 116b, which are more than the four first fluid passages 111a (111c).
Connection passages 117b are divided into nine branches and are connected in parallel to each of the heat exchange passages 116b. The heat exchange passages 116b each have a flow passage length L32. As shown in Fig. 9, the flow passage 115b of the first fluid passage 111b has a flow passage width W32 and a flow passage depth H32.

The flow passage width W32 of the flow passage 115b of the first fluid passage 111b is larger than the flow passage width W31 of the flow passage 115a (115c) of the first fluid passage 111a (111c). The flow passage depth H32 of the flow passage 115b of the first fluid passage 111b is equal to the flow passage depth H31 of the flow passage 115a (115c) of the first fluid passage 111a (111c). The flow passage length L32 of each of the heat exchange passages 116b of the first fluid passage 111b is equal to the flow passage length L31 of the flow passage 115a (115c) of the first fluid passage 111a (111c).

As described above, in Figs. 8 and 9, the flow passage width W32 of the first fluid passage 111b is larger than the flow passage width W31 of each of the first fluid passages 111a and 111c, and the number of (nine) flow passages 115b of the first fluid passage 111b is larger than the number of (four) flow passages 115a (115c) of the first fluid passage 111a (111c). These flow passage widths and the number of flow passages 115 are set according to the types of fluids that respectively flow through the first fluid passages 111a to 111c or the magnitudes of the loads (amount of heat exchange) on the fluids. Therefore, in the first fluid passage 111b, the amount of heat exchange is larger than in the first fluid passages 111a and 111c.

As described above, according to the second embodiment, the first fluid passage 111b is different from the remaining first fluid passages 111a and 111c in the flow passage width and the number of flow passages. In the second embodiment, the example in which the flow passage width and the number of flow passages are different is shown, but only one of the flow passage width, the flow passage length, the flow passage depth, and the number of flow passages may alternatively be different. All of the flow passage width, the flow passage length, the flow passage depth, and the number of flow passages may alternatively be different. In addition, the first fluid passages 111a, 111b, and 111c may have configurations different from each other (configurations in which any of the flow passage width, the flow passage length, the flow passage depth, and the number of flow passages is different).

Although the description of a second heat transfer plate 20 is omitted, second fluid passages 21 of the second heat transfer plate 20 also have the same shapes corresponding to the aforementioned first fluid passages 111a to 111c, respectively.

The remaining configurations of the second embodiment are similar to those of the aforementioned first embodiment.

### (Effects of Second Embodiment)

According to the second embodiment, similarly to the aforementioned first embodiment, the first heat transfer plate 110 including the plurality of first fluid passages 111 connected to the different pairs of first ports 2 (the pair of 2a and 2b, the pair of 2c and 2d, and the pair of 2e and 2f) and isolated from each other is provided such that even when a plurality of types of fluids are handled by the common diffusion-bonded heat exchanger 200, the number of types of components and the number of components can be reduced.

With the above configuration, a plurality of types of first fluid passages 111a to 111c can be formed in the same first heat transfer plate 110, and thus the degree of freedom of the configuration of the fluid passage for each type according to the load (amount of heat exchange) on each fluid can be sufficiently ensured. That is, the shapes and layouts of the first fluid passages 111a, 111b, and 111c can be freely set in the first heat transfer plate 110.

According to the second embodiment, as described above, the first fluid passage 111b of the plurality of first fluid passages 111a to 111c is different from another first fluid passages 111a (111c) in at least one of the flow passage width W32 of the flow passage 115b, the flow passage length L32 of the flow passage 115b, the flow passage depth H32 of the flow passage 115b, and the number of flow passages 115b. The configurations (the flow passage width of the flow passage, the flow passage length of the flow passage, the flow passage depth of the flow passage, and the number of flow passages) of the plurality of types of first fluid passages 111a to 111c are different in this manner such that a surplus amount of heat exchange that cannot be adjusted with a change in the number of stacked heat transfer plates can be easily and finely adjusted for each of the first fluid passages 111a to 111c. Consequently, the amount of heat exchange can be easily and accurately optimized according to the load (amount of heat exchange) on each type of first fluid passage 111.

The remaining effects of the second embodiment are similar to those of the aforementioned first embodiment.

The embodiments disclosed this time must be considered as illustrative in all points and not restrictive. The range of the present invention is not shown by the above description of the embodiments but by the scope of claims for patent, and all modifications (modified examples) within the meaning and range equivalent to the scope of claims for patent are further included.

For example, while the counter-flow heat exchanger 100 in which the fluids that pass through the first heat transfer plate 10 and the fluid that passes through the second heat transfer plate 20 flow in opposite directions has been shown as an example in the aforementioned first embodiment, the present invention is not restricted to this. According to the present invention, the heat exchanger may be a parallel-flow heat exchanger in which the fluids that pass through the first heat transfer plate 10 and the fluid that passes through the second heat transfer plate 20 flow in the same direction, or a cross-flow heat exchanger in which the flows of the fluids cross (see Fig. 10), for example.

While the example in which the core 1 is formed by alternately stacking the plurality of first heat transfer plates 10 and the plurality of second heat transfer plates 20 has been shown in the aforementioned first embodiment, the present invention is not restricted to this. According to the present invention, the first heat transfer plates and the second heat transfer plates may not necessarily be alternately stacked. For example, two (a plurality of) second heat transfer plates may be stacked on one first heat transfer plate such that a second heat transfer plate, a first heat transfer plate, a second heat transfer plate, a second heat transfer plate, a first heat transfer plate, ... are stacked along a direction Z. Conversely, one second heat transfer plate may be stacked on two (a plurality of) first heat transfer plates.

While the example in which the three first fluid passages 11 are provided in the first heat transfer plate 10 (110) has been shown in each of the aforementioned first and second embodiments, the present invention is not restricted to this. According to the present invention, two or four or more first fluid passages 11 may be provided in the first heat transfer plate 10.

While the example in which the plurality of second fluid passages 21 are provided in the second heat transfer plate 20 so as to correspond to the first fluid passages 11 of the first heat transfer plate 10 has been shown in the aforementioned first embodiment, the present invention is not restricted to this. According to the present invention, only one second fluid passage may be provided, for example. Specifically, as in a first modified example shown in Fig. 10, one common second fluid passage 221 may be provided in a second heat transfer plate 220 for three first fluid passages 11 of a first heat transfer plate 10. In this first modified example, the second fluid passage 221 extends in a direction Y orthogonal to the first fluid passages 11, and a cross-flow heat exchanger is formed. The width W5 of the second fluid passage 221 in a direction X is substantially equal to the length L1 of each of the first fluid passages 11, and the second fluid passage 221 extends from one end to the other end of the second heat transfer plate 220 in the direction Y. Thus, heat exchange is performed between a fluid D that flows through one (common) second fluid passage 221 and fluids, A, B, and C that respectively flow through the three first fluid passages 11.

The number of second fluid passages may be any number. In other words, the second fluid passages may be equal in number to the first fluid passages, or a plurality of second fluid passages other than one may be provided. For example, a plurality of (two, for example) second fluid passages may be provided so as to correspond to one first fluid passage.

While the example in which the three second fluid passages 21a to 21c are respectively connected to the different pairs of second ports 3 (the pair of 3a and 3b, the pair of 3c and 3d, and the pair of 3e and 3f) has been shown in the aforementioned first embodiment, the present invention is not restricted to this. According to the present invention, the three second fluid passages 21a to 21c may be connected to common second ports. In this case, in Fig. 6, for example, the partition plates 6c provided in each of the headers 6a and 6b may be removed. Thus, the internal spaces of the headers 6a and 6b are connected, and the three second fluid passages 21a to 21c are connected to the common second ports 3. In this case, three pairs of second ports 3 may be provided, but it is only required to provide at least a pair of second ports 3 on the entrance side (3c, for example) and on the exit side (3d, for example).

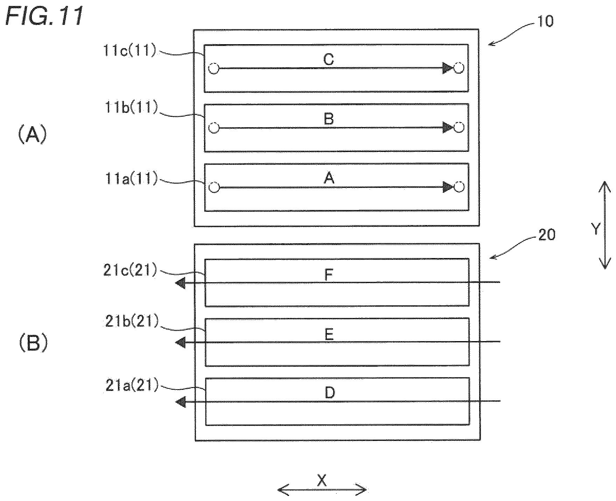

While the example in which the same type of fluid (fluid D) is supplied to the three second fluid passages 21 of the second heat transfer plate 20 has been shown in the aforementioned first embodiment, the present invention is not restricted to this. According to the present invention, as in a second modified example shown in Fig. 11, different types of fluids may be supplied to the three second fluid passages 21. In Fig. 11, a fluid A, a fluid B, and a fluid C are respectively supplied to three first fluid passages 11 of a first heat transfer plate 10 (Fig. 11(A)), and a fluid D, a fluid E, and a fluid F are respectively supplied to three second fluid passages 21 of a second heat transfer plate (Fig. 11(B)). In the second modified example, heat exchange is performed between the fluid A in a first fluid passage 11a and the fluid D in a second fluid passage 21a, between the fluid B in a first fluid passage 11b and the fluid E in a second fluid passage 21b, and between the fluid C in a first fluid passage 11c and the fluid F in a second fluid passage 21c. The fluids A to F may be different types of fluids, or some of the fluids A to F may be the same type of fluids.

While the example in which two types of first and second heat transfer plates 10 and 20 are provided has been shown in the aforementioned first embodiment, the present invention is not restricted to this. According to the present invention, three or more types of heat transfer plates including a third heat transfer plate, for example, may be provided. However, rather than providing the third heat transfer plate, fluid passages provided in the third heat transfer plate are preferably provided in the first heat transfer plate 10 and the second heat transfer plate 20 since the number of types of components (the number of types of heat transfer plates) and the number of components can be reduced.

While the example in which the plurality of first fluid passages 11 are each formed into an elongated shape that extends in the direction X from the inlet port 12 on the entrance side toward the corresponding outlet port 13 on the exit side, and are disposed side by side along the direction Y orthogonal to the direction X has been shown in each of the aforementioned first and second embodiments, the present invention is not restricted to this. According to the present invention, each of the first fluid passages may not be formed into an elongated shape. For example, in the first heat transfer plate, each of the first fluid passages may be formed into a square shape or a shape other than a rectangular shape. Furthermore, the first fluid passages may not be disposed side by side in the short-side direction (direction Y) orthogonal to the longitudinal direction (direction X). For example, the first fluid passages may be respectively disposed in regions obtained by dividing the first heat transfer plate into four vertically and horizontally (in a matrix).

While the example in which the flow passage 15 (25) including the heat exchange passages 16 (26) and the connection passages 17 (27) is provided in each of the first fluid passages 11 and the second fluid passages 21 has been shown in the aforementioned first embodiment, the present invention is not restricted to this. The configuration of the flow passage constituting each of the first fluid passages and the second fluid passages is not particularly limited. The shape of the flow passage and the number of flow passages may be arbitrarily set. For example, instead of the linear heat exchange passages, bent or curved heat exchange passages may be provided. The number of branches of the connection passages may be other than the aforementioned four branches, eight branches, and nine branches, and may be the number of branches corresponding to the number of heat exchange passages to be connected. The flow passage 15 constituting each of the first fluid passages 11a to 11c may have shapes different from each other.

### Description of Reference Numerals

1: core
2 (2a to 2f): first port
3 (3a to 3f): second port
10, 110: first heat transfer plate
11 (11a to 11c), 111 (111a to 111c): first fluid passage
12: inlet port (one end)
13: outlet port (another end)
14: diffusion bonding surface
15: flow passage
20, 220: second heat transfer plate
21 (21a to 21c), 221: second fluid passage
100, 200: heat exchanger (diffusion-bonded heat exchanger)
X: direction (first direction)
Y: direction (second direction)

## Claims

1. A diffusion-bonded heat exchanger comprising:
a core in which a first heat transfer plate and a second heat transfer plate each including a groove-like fluid passage are stacked and diffusion-bonded to each other;
a plurality of pairs of first ports through which fluids are introduced into and discharged from the first heat transfer plate; and
at least a pair of second ports through which a fluid is introduced into and discharged from the second heat transfer plate, wherein
the first heat transfer plate includes a plurality of first fluid passages connected to different pairs of the first ports and isolated from each other.

2. The diffusion-bonded heat exchanger according to claim 1, wherein
the second ports include a plurality of pairs of second ports,
the second heat transfer plate includes a plurality of second fluid passages formed so as to correspond to the first fluid passages of the first heat transfer plate and isolated from each other, and
the plurality of second fluid passages are respectively connected to different pairs of the second ports.

3. The diffusion-bonded heat exchanger according to claim 2, wherein
the second fluid passages are equal in number to the first fluid passages, and the second fluid passages are respectively disposed at locations that overlap the plurality of first fluid passages of the first heat transfer plate in a planar view.

4. The diffusion-bonded heat exchanger according to claim 1, wherein
the plurality of first fluid passages are each formed into an elongated shape that extends in a first direction from one end connected to the first port on an entrance side toward another end connected to the first port on an exit side corresponding thereto in a plane of the first heat transfer plate, and are disposed side by side along a second direction orthogonal to the first direction.

5. The diffusion-bonded heat exchanger according to claim 4, wherein
the plurality of first fluid passages are spaced apart from each other in the second direction on a same surface of the first heat transfer plate, and
the first heat transfer plate includes a diffusion bonding surface with the second heat transfer plate between the first fluid passages adjacent to each other in the second direction.

6. The diffusion-bonded heat exchanger according to claim 1, wherein
each of the plurality of first fluid passages includes a flow passage that connects one end connected to the first port on an entrance side to another end connected to the first port on an exit side corresponding thereto, and
at least one of the plurality of first fluid passages is different from another one of the plurality of first fluid passages in at least one of a flow passage width of the flow passage, a flow passage length of the flow passage, a flow passage depth of the flow passage, and a number of the flow passages.
